# FASCICULE DE BREVET EUROPEEN

(11) **EP 3 542 059 B1**
(45) Date de publication et mention de la délivrance du brevet: **29.07.2020**
(21) Numéro de dépôt: 17804963.1
(22) Date de dépôt: 14.11.2017
(51) Int. Cl.: F04B 5/02, F04B 39/00, F04B 39/10, F04B 53/10

(54) **COMPRESSEUR ALTERNATIF**
HUBKOLBENVERDICHTER
RECIPROCATING COMPRESSOR

(30) Priorité: 16.11.2016 FR 1661102; 22.02.2017 BE 201705110
(43) Date de publication de la demande: 25.09.2019
(73) Titulaire: Atlas Copco Crepelle SAS, 59008 Lille Cedex (FR)
(72) Inventeur: BODAIN, Bertrand Mathieu, 59008 Lille Cedex (FR)
(74) Mandataire: Van Minnebruggen, Ewan Benito Agnes
(86) Numéro de dépôt international: PCT/IB2017/057086
(87) Numéro de publication internationale: WO 2018/092017

(56) Documents cités:
- EP-A2- 1 059 444
- EP-B1- 2 370 717
- WO-A1-2013/098097
- CA-A1- 2 644 346
- JP-U- H0 643 436
- US-A- 4 128 109
- US-A- 4 928 733

## Description

La présente invention concerne un compresseur alternatif comprenant un cylindre dans lequel est disposée une cavité et un arrangement apte à effectuer un mouvement alternatif comprenant un piston et une tige de piston et un moyen d'entraînement configuré pour imprimer un mouvement audit arrangement sous la forme d'un mouvement alternatif, ledit piston divisant ladite cavité en une première chambre et en une deuxième chambre respectivement, que l'on désigne par les termes « chambre de l'extrémité côté tête » et « chambre de l'extrémité côté vilebrequin ». chacune desdites première et deuxième chambres étant reliée via des systèmes de soupapes d'aspiration et des systèmes de soupapes d'évacuation respectifs à un conduit d'aspiration et à un conduit d'évacuation, lesdits systèmes de soupapes d'aspiration et d'évacuation comprenant chacun un logement définissant une chambre de soupape et un corps de soupape mobile entre une première position fermée dans laquelle ladite première ou ladite deuxième chambre est déconnectée par fluide de ladite chambre de soupape et une deuxième position ouverte dans laquelle ladite première ou ladite deuxième chambre est mise en Maison par fluide avec une chambre de soupape respective.

Un type connu d'un compresseur alternatif est représenté dans le document EP 1 659 302 A1.

Le document WO 2013/098097 A1 divulgue un compresseur alternatif selon le préambule de la revendication 1.

Le document EP 1 059 444 A2 divulgue un compresseur alternatif comprenant une soupape d'évacuation ayant un corps de soupape et une chambre de soupape. Ledit compresseur est en outre muni d'un récipient définissant un volume variable, ledit volume étant mis en liaison par fluide avec la chambre de soupape de ladite soupape d'évacuation au moyen de deux orifices afin de réduire le niveau de pulsations se manifestant dans la soupape d'évacuation.

En état de marche d'un compresseur alternatif, ledit piston effectue un mouvement en va-et-vient dans le cylindre, de manière à, en alternance, aspirer un gaz qui doit être comprimé à travers les systèmes de soupapes d'aspiration et, en même temps, à comprimer une quantité de gaz de l'autre côté du piston et à forcer le gaz comprimé à travers un des systèmes de soupapes d'évacuation jusque dans le conduit d'évacuation.

La pratique a montré qu'en état de marche d'un compresseur alternatif, des niveaux de pulsations élevés se manifestent dans les systèmes de soupapes d'évacuation, qui peuvent donner lieu à des dommages sévères de ces systèmes de soupapes d'évacuation.

Des mesures connues pour tenter de résoudre ce problème consistent à augmenter le volume des chambres de soupapes ou à ajouter un grand volume externe : toutefois. de manière spécifique. on est confronté à des restrictions en termes d'espace d'intégration disponible, étant donné que les dimensions globales du compresseur sont souvent fixées.

La présente invention concerne un compresseur alternatif qui ne présente pas de telles variations élevées de pulsations de pression et qui ne requiert pas une augmentation de la dimension de la machine, et qui procure en outre une approche économique pour obtenir les objets indiqués ci-dessus.

À cet effet, invention concerne un compresseur alternatif comprenant un cylindre dans lequel est disposée une cavité et un arrangement apte à effectuer un mouvement alternatif comprenant un piston et une tige de piston et un moyen d'entraînement configuré pour imprimer un mouvement audit arrangement sous la forme d'un mouvement alternatif, ledit piston divisant ladite cavité en une première chambre et en une deuxième chambre respectivement, que l'on désigne par les termes « chambre de l'extrémité côté tête » et « chambre de l'extrémité côté vilebrequin », chacune desdites première et deuxième chambres étant reliée via des systèmes de soupapes d'aspiration et des systèmes de soupapes d'évacuation respectifs à un conduit d'aspiration et à un conduit d'évacuation, lesdits systèmes de soupapes d'aspiration et d'évacuation comprenant chacun un logement définissant une chambre de soupape et un corps de soupape mobile entre une première position fermée dans laquelle ladite première ou ladite deuxième chambre est déconnectée par fluide de ladite chambre de soupape et une deuxième position ouverte dans laquelle ladite première ou ladite deuxième chambre est mise en liaison par fluide avec une chambre de soupape respective, ledit compresseur étant en outre muni d'un récipient définissant un volume fixe, ledit volume fixe étant mis en liaison par fluide avec une chambre de soupape d'au moins un desdits systèmes de soupapes d'évacuation, au moyen d'un conduit.

Un avantage lié à l'invention réside dans le fait que l'on crée un espace supplémentaire pour faire office de tampon pour des pulsations de pression et que le petit volume dans le conduit agit à la manière d'un ressort en opposition de phase avec les pulsations dans la chambre de soupape, si bien que l'on obtient une diminution des pics de pression dans la chambre de soupape du système concerné de soupape d'évacuation et que l'on peut éviter les dégradations du système de soupape d'évacuation, sans devoir augmenter les dimensions globales de la machine.

En outre, on a trouvé que dans la configuration conformément à la présente invention, ladite liaison entre ladite chambre de soupape et ledit volume dans le récipient va faire office de filtre acoustique de Helmholtz ou de filtre passe-bas donnant lieu à la réduction désirée des pulsations et à une augmentation de la durée de vie du système de soupape d'évacuation.

En effet, étant donné que le montage agit comme un filtre, les fréquences dans le système qui sont situés au-dessus de la fréquence seuil sont supprimées, et par voie de conséquence, les pulsations sont réduites.

Conformément à l'invention, ledit récipient comprend un logement hermétiquement fermé de façon à restreîndre toute fuite de gaz sous haute pression dans l'atmosphère.

Conformément à une caractéristique préférentielle de l'invention, le logement hermétiquement fermé dudit récipient est relié à un logement de soupape respectif.

Conformément à l'invention, ledit conduit qui relie la chambre de soupape d'évacuation audit volume fixe dans ledit récipient est réalisé sous la forme d'un tube droit qui s'étend avec une extrémité dans ladite chambre de soupape d'évacuation et avec l'autre extrémité dans ledit récipient.

Dans le but de mieux indiquer les caractéristiques de l'invention, on décrit ci-après un certain nombre de formes de réalisation préférées d'un compresseur alternatif conforme à l'invention, à titre d'illustration, sans aucun caractère limitatif, en se référant aux figures dans lesquelles :
la figure 1 représente d'une manière schématique un compresseur alternatif selon l'invention :
la figure 2 représente la partie indiquée par F2 en figure 1 à une plus grande échelle :
les figures 3 et 4 représentent des formes de réalisation données en variante d'un compresseur alternatif conformément à l'invention.

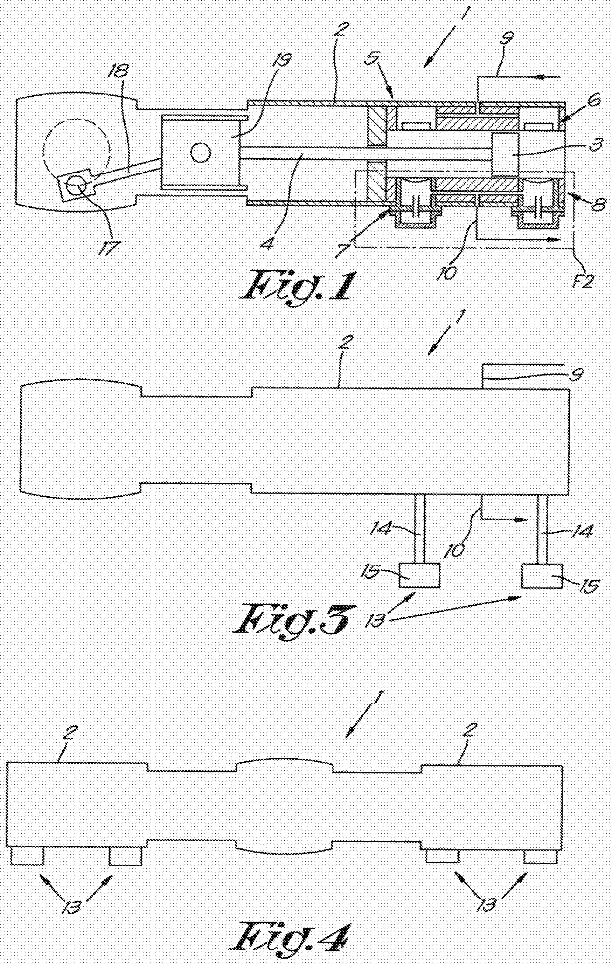

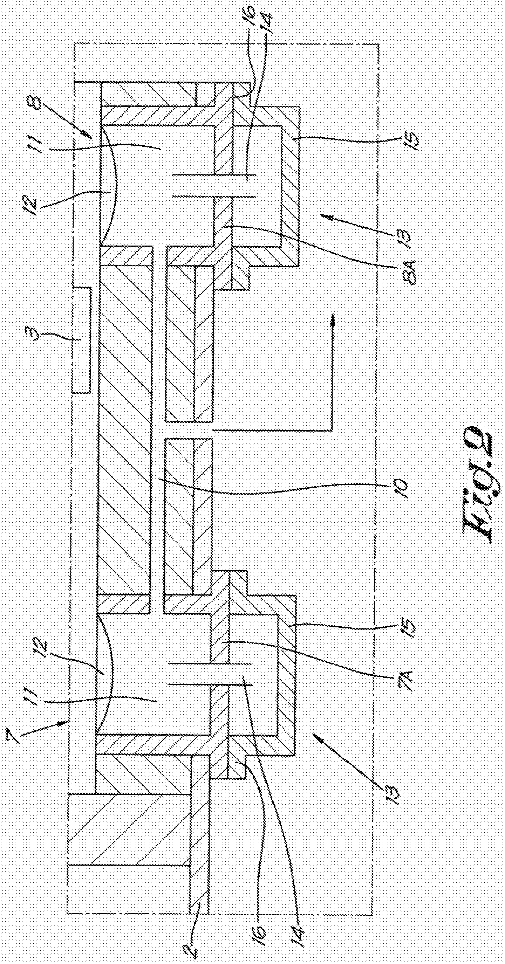

Dans les figures 1 et 2, on représente un compresseur alternatif 1 conformément à l'invention. Ledit compresseur 1 comprend un cylindre 2 comprenant une cavité cylindrique interne dans laquelle vient se loger un piston 3. Ledit piston 3, qui est mobile à l'intérieur de ladite cavité, fait partie d'un arrangement apte à effectuer un mouvement alternatif, comprenant également une tige de piston 4.

Le compresseur 1 comprend en outre un moyen d'entraînement configuré pour imprimer audit arrangement un mouvement sous la forme d'un mouvement alternatif, ledit moyen d'entraînement comprenant le cas échéant une manivelle.

Ledit piston 3 divise ladite cavité en une première chambre et en une deuxième chambre, que l'on désigne respectivement par les termes « chambre de l'extrémité côté tête » et « chambre de l'extrémité côté vilebrequin ». chacune desdites première et deuxième chambres étant reliées via un système de soupape d'aspiration 5 ou 6 et un système de soupape d'évacuation 7 ou 8, respectifs à un conduit d'aspiration 9 et à un conduit d'évacuation 10, respectifs.

lesdits systèmes de soupapes d'aspiration 5 et 6 et lesdits systèmes de soupapes d'évacuation 7 et 8 comprennent chacun un logement de soupape définissant une chambre de soupape 11 dans laquelle est disposé en mobilité, un corps de soupape 12. Le corps de soupape 12 dans chaque chambre de soupape 11 est configuré pour se déplacer entre une première position fermée dans laquelle ladite première ou ladite seconde chambre est déconnectée par fluide de la chambre de soupape associée 11 et une deuxième position ouverte dans laquelle ladite première ou ladite deuxième chambre est mise en liaison par fluide avec une chambre de soupape respective 11. Dans la forme de réalisation telle que représentée en figure 2, lesdits systèmes de soupapes d'évacuation 7 et 8 comprennent en outre un recouvrement de soupape 7A et 8A. respectivement. Chacun desdits recouvrements de soupapes 7A et 8A comprend dans ce cas un tronçon principalement tubulaire qui s'étend le long des parois longitudinales des chambres de soupapes 11. lesdits recouvrements de soupapes 7A et 8A sont configurés de façon à maintenir les corps de soupapes 12 dans l'orientation correcte au sein du système de soupape d'évacuation 7 ou 8.

Conformément à l'invention, le compresseur alternatif 1 est également muni d'un récipient 13, et dans ce cas particulier de deux récipients 13, chacun définissant un volume fixe, ledit volume fixe étant mis en connexion par fluide avec une chambre de soupape 11 d'au moins un système de soupapes d'évacuation respectif 7 et 8, respectivement, au moyen d'un conduit 14.

Conformément à l'invention, ledit récipient 13 comprend un logement 15 hermétiquement fermé de façon à restreindre toute fuite de gaz sous haute pression dans l'atmosphère. Dans ce cas, mais non de manière nécessaire. chacun desdits logements de récipients 15 est monté sur un logement de soupape respectif des systèmes de soupapes d'évacuation 7 et 8.

Les logements de récipients 15 comprennent chacun un récipient principalement cylindrique obturé à une extrémité avec une paroi inférieure et monté avec son extrémité ouverte contre la paroi externe du cylindre, que ce soit de manière directe ou indirecte.

Dans l'exemple tel que représenté en figure 2. les recouvrements de soupapes 7A et 8A respectifs sont obturés à leur extrémité externe avec une paroi terminale à travers laquelle s'étend un conduit respectif 14 et ledit logement de récipient 15 est raccordé à une bride orientée vers l'extérieur. sur ladite extrémité externe dudit recouvrement de soupape 7A ou 8A, Toutefois, en variante, les chambres de soupapes 11 pourraient être délimitées par la paroi du cylindre 2, ledit conduit 14 s'étendant à travers ladite paroi et ledit logement de récipient 15 étant par exemple également raccordé à ladite paroi de cylindre.

Il est clair que, conformément à l'invention, on dispose de plusieurs manières pour l'interconnexion entre le logement de récipient 15 et ledit logement de soupape et invention n'est pas limitée à la configuration exocte telle que représentée en figure 2.

Le moyen de connexion pour établir la liaison entre le récipient 13 et le logement de soupape peut être de différents types. comme par exemple une connexion par boulons, une connexion soudée ou n'importe quel autre type de connexion mécanique. Dans ce cas, à la fois ledit logement de récipient 15 et ledit logement de soupape sont munis d'une surface d'étanchéisation. La surface d'étanchéisation des récipients 13 est réalisée dans ce cas via la face terminale d'une bride de connexion 16.

Entre ladite bride 16 et ledit logement de soupape, on prévoit de préférence un joint d'étanchéité, dans le cas présent sous la forme d'un joint torique ; toutefois. il est clair que l'on peut utiliser tous les types de joints d'étanchéité.

Les conduits 14 qui relient chacune des chambres de soupapes d'évacuation 11 à un volume respectif dans un récipient 13 sont réalisés sous la forme d'un tube droit s'étendant avec une extrémité dans ladite chambre de soupape d'évacuation 11 et avec l'autre extrémité dans ledit récipient 13.

Le mouvement alternatif du piston 3 et de la tige du piston 4 est commandé, dans cet exemple, par une manivelle 17 à travers une tige de liaison 18 qui est articulée à une biellette 19 de préférence munie de sabots de glissement qui entrent en contact par glissement avec des surfaces de glissement Le mouvement rotatif de la manivelle 17 est converti en un mouvement linéaire de va-et-vient de la biellette 19 et ce mouvement est transmis audit piston 3. En variante, on peut réaliser un compresseur alternatif 1 conformément à l'invention sous la forme de ce que l'on appelle un piston oscillant dans lequel ta manivelle 17 entraîne de manière spécifique la tige du piston 4 de manière directe, sans l'intervention d'une tige de liaison ou de sabots de glissement.

Le principe de fonctionnement d'un compresseur alternatif conformément à l'invention tel qu'on le représente dons les figures 1 et 2 est identique à celui de compresseurs connus alternatif du type à double action, dans lesquels du gaz est aspiré via un des systèmes de soupapes d'aspiration 5 ou 6 au cours du mouvement linéaire du piston 3 dans le cylindre 2. Dans ce cas, te piston 3 se déplace d'une manière telle que le volume régnant dons la chambre de l'extrémité côté tête, diminue, et que le gaz qui doit être comprimé est aspiré à travers le conduit d'aspiration 9 et à travers le système de soupape d'aspiration 5 pour pénétrer dans la chambre de l'extrémité côté manivelle. À proximité de la fin de sa course, le piston 3 pousse le gaz comprimé hors de la chambre de l'extrémité côté tête à travers le système de soupape d'évacuation 8. De manière similaire, lorsqu'il effectue un mouvement dans la direction opposée, du gaz sera aspiré dans la chambre de l'extrémité côté tête à travers le conduit d'aspiration 9 et sera poussé hors de la chambre de l'extrémité côté manivelle via le système de soupape d'évacuation 7.

L'avantage principal lié à l'invention réside dans le fait que l'espace supplémentaire que l'on crée par l'addition du récipient 13, fait office de tampon pour des pulsations de pression, donnant lieu au fait que l'on diminue les pics de pression dans les chambres de soupapes 11 des systèmes respectifs 7 et 8 de soupapes d'évacuation et que l'on peut éviter les dégradations des systèmes de soupapes d'évacuation 7 et 8, sans devoir augmenter les dimensions globales de la machine.

En effet, le tout constitué par la chambre de soupape 11, par le conduit associé 14 et par le volume dans le récipient 13 agit à la manière d'un filtre acoustique de Helmholtz ou d'un filtre passe-bas donnant lieu à une réduction des pulsations et en définitive à une augmentation de la durée de vie du système de soupape d'évacuation, étant donné que l'on supprime les fréquences dans le système qui se situent au-dessus de ta fréquence seuil du filtre et par conséquent. que l'on réduit les pulsations,

Étant donné que le courant principal du gaz comprimé qui quitte la chambre de soupape d'évacuation 11 ne s'écoule pas à travers le récipient 13, on obtient une chute de pression limitée, contrairement à des systèmes dans lesquels le gaz comprimé est poussé à travers un certain nombre de chambres successives dans le but de tenter de limiter les pulsations. En effet, les chambres de soupapes d'évacuation 11 sont reliées par fluide au conduit d'évacuation 10 dans le but d'en évacuer le courant principal de gaz comprimé: toutefois, en outre, les conduits 14 s'étendent jusque dans les chambres de soupape d'évacuation 11 dans le but de permettre à une portion secondaire seulement mineure de gaz comprimé de se déplacer jusque dans le récipient associé 13, si bien que le volume dans ledit récipient 13 fait office d'élément d'atténuation pour les pulsations qui se produisent dans la chambre de soupape d'évacuation 11.

Conformément à une forme de réalisation donnée en variante. d'un compresseur alternatif 1 selon l'invention, comme on peut le voir en figure 3, ledit au moins un logement de récipient 15 n'est pas relié directement à la paroi du cylindre, mais est monté à distance dudit cylindre 2.

Dans les formes de réalisation que l'on représente dans les figures 1 à 3, ledit cylindre 2 présente deux systèmes de soupapes d'évacuation 7 et 8. la chambre de soupape 11 de chacun desdits systèmes de soupapes d'évacuation 7 et 8 étant reliée à un récipient susmentionné 13; toutefois, l'invention n'y est pas limitée étant donné qu'un compresseur alternatif 1 selon l'invention peut également contenir un seul système de soupape d'évacuation. comme ce serait te cas si le piston était du type à action simple plutôt qu'à double action. En variante, le compresseur alternatif 1 selon l'invention peut également comprendre plus de deux systèmes de soupapes d'évacuation.

De préférence, mois non de manière nécessaire, les deux systèmes de soupapes d'évacuation sont disposés sur le même côté dudit cylindre 2.

En se tournant vers la figure 4. on représente une forme de réalisation d'un compresseur alternatif 1 qui comprend deux figes de piston 4, chaque tige de piston 4 étant reliée à un piston respectif 3 et audit moyen d'entraînement.

La présente invention n'est en aucune manière limitée aux formes de réalisation que l'on a décrites ci-dessus et que l'on représente dans les dessins; au contraire, un compresseur alternatif selon l'invention peut être réalisé dans toutes sortes de configurations et de dimensions, sans se départir de l'invention telle que définie dans les revendications en annexe.

## Revendications

1. Compresseur alternatif comprenant un cylindre (2) dans lequel est disposée une cavité et un arrangement apte à effectuer un mouvement alternatif comprenant un piston (3) et une tige de piston (4) et un moyen d'entraînement configuré pour imprimer un mouvement audit arrangement sous la forme d'un mouvement alternatif, ledit piston (3) divisant ladite cavité en une première chambre et en une deuxième chambre, que l'on désigne respectivement par les termes chambre de l'extrémité côté tête et chambre de l'extrémité côté vilebrequin, chacune desdites première et deuxième chambres étant reliée via des systèmes de soupapes d'aspiration (5 et 6) et des systèmes de soupapes d'évacuation (7 et 8) respectifs à un conduit d'aspiration (9) et à un conduit d'évacuation (10), lesdits systèmes de soupapes d'aspiration et d'évacuation (5 à 8) comprenant chacun un logement définissant une chambre de soupape (11) et un corps de soupape (12) mobile entre une première position fermée dans laquelle ladite première ou ladite deuxième chambre est déconnectée par fluide de ladite chambre de soupape et une deuxième position ouverte dans laquelle ladite première ou ladite deuxième chambre est mise en liaison par fluide avec une chambre de soupape respective, **caractérisé en ce que** ledit compresseur (1) est en outre muni d'un récipient (13) définissant un volume fixe, ledit volume fixe étant mis en liaison par fluide avec une chambre de soupape d'au moins un desdits systèmes de soupapes d'évacuation (7 ou 8), au moyen d'un conduit (14), dans lequel ledit récipient (13) comprend un logement hermétiquement fermé (15) de façon à restreindre toute fuite de gaz sous haute pression dans l'atmosphère, dans lequel ledit conduit (14) qui relie la chambre de soupape d'évacuation (11) audit volume fixe dans ledit récipient (13) est réalisé sous la forme d'un tube droit qui s'étend avec une extrémité dans ladite chambre de soupape d'évacuation (11) et avec l'autre extrémité à l'intérieur dudit récipient (13).

2. Compresseur alternatif selon la revendication 1, **caractérisé en ce que** ledit récipient (13) comprend un logement (15) et **en ce que** ledit logement de récipient (15) est monté sur un logement de soupape respectif.

3. Compresseur alternatif selon la revendication 2, **caractérisé en ce qu'**on prévoit un moyen d'étanchéisation entre une surface d'étanchéisation dudit récipient (13) et une surface d'étanchéisation dudit logement de soupape sur lequel est monté ledit récipient (13).

4. Compresseur alternatif selon l'une quelconque des revendications précédentes, **caractérisé en ce que** ledit cylindre (2) présente deux systèmes de soupapes d'évacuation (7 et 8), la chambre de soupape (11) de chacun desdits systèmes de soupapes d'évacuation (7 et 8) étant reliée à un récipient (13) mentionné ci-dessus.

5. Compresseur alternatif selon la revendication 4, **caractérisé en ce que** les deux systèmes de soupapes d'évacuation (7 et 8) sont disposés sur le même côté dudit cylindre (2).

6. Compresseur alternatif selon l'une quelconque des revendications précédentes, **caractérisé en ce que** ledit compresseur (1) comprend deux tiges de piston (4), chaque tige de piston (4) étant reliée à un piston respectif (3) et audit moyen d'entraînement.

## Patentansprüche

1. Hubkolbenverdichter umfassend einen Zylinder (2), in dem ein Hohlraum angeordnet ist, und eine Anordnung, die zum Ausführen einer Hin- und Herbewegung geeignet ist und einen Kolben (3) und eine Kolbenstange (4) umfasst, und eine Antriebseinrichtung, die konfiguriert ist, um die Anordnung in Form einer Hin- und Herbewegung zu bewegen, wobei der Kolben (3) den Hohlraum in eine erste Kammer und in eine zweite Kammer teilt, die jeweils mit den Begriffen dem Kopf zugewandte Kammer und der Kurbelwelle zugewandte Kammer bezeichnet sind, wobei jede der ersten und zweiten Kammern über Saugventilsysteme (5 und 6) und jeweilige Auslassventilsysteme (7 und 8) mit einem Saugrohr (9) und einem Auslassrohr (10) verbunden ist, wobei die Saug- und Auslassventilsysteme (5 bis 8) jeweils ein Gehäuse umfassen, das eine Ventilkammer (11) und einen Ventilkörper (12) definiert, der zwischen einer ersten geschlossenen Position, in der die erste oder die zweite Kammer durch Fluid von der Ventilkammer getrennt ist, und einer zweiten offenen Position, in der die erste oder die zweite Kammer durch Fluid mit einer jeweiligen Ventilkammer verbunden ist, beweglich ist, **dadurch gekennzeichnet, dass** der Verdichter (1) ferner mit einem Behälter (13) ausgestattet ist, der ein festes Volumen definiert, wobei das feste Volumen durch Fluid mit einer Ventilkammer von mindestens einem der Ventilsysteme (7 oder 8) über eine Leitung (14) verbunden ist, in welcher der Behälter (13) ein hermetisch abgedichtetes Gehäuse (15) umfasst, um jegliches Austreten von Gas unter hohem Druck in die Atmosphäre zu begrenzen, in welcher die Leitung (14), welche die Auslassventilkammer (11) mit dem festen Volumen in dem Behälter (13) verbindet, in Form eines geraden Rohrs hergestellt ist, das sich mit einem Ende in die Ventilkammer (11) und mit dem anderen Ende in den Innenteil des Behälters (13) erstreckt.

2. Hubkolbenverdichter nach Anspruch 1, **dadurch gekennzeichnet, dass** der Behälter (13) ein Gehäuse (15) umfasst und das Behältergehäuse (15) an einem jeweiligen Ventilgehäuse montiert ist.

3. Hubkolbenverdichter nach Anspruch 2, **dadurch gekennzeichnet, dass** zwischen einer Dichtfläche des Behälters (13) und einer Dichtfläche des Ventilgehäuses, an welchem der Behälter (13) montiert ist, ein Dichtmittel vorgesehen ist.

4. Hubkolbenverdichter nach einem der vorhergehenden Ansprüche, **dadurch gekennzeichnet, dass** der Zylinder (2) zwei Auslassventilsysteme (7 und 8) aufweist, wobei die Ventilkammer (11) jedes der Auslassventilsysteme (7 und 8) mit einem oben genannten Behälter (13) verbunden ist.

5. Hubkolbenverdichter nach Anspruch 4, **dadurch gekennzeichnet, dass** die beiden Auslassventilsysteme (7 und 8) auf derselben Seite des Zylinders (2) angeordnet sind.

6. Hubkolbenverdichter nach einem der vorhergehenden Ansprüche, **dadurch gekennzeichnet, dass** der Verdichter (1) zwei Kolbenstangen (4) umfasst, wobei jede Kolbenstange (4) mit einem jeweiligen Kolben (3) und mit den Antriebsmitteln verbunden ist.

## Claims

1. A reciprocating compressor comprising a cylinder (2) wherein a cavity is arranged and an arrangement able to perform a reciprocating movement comprising a piston (3) and a piston rod (4) and a drive means configured to impart a movement to said arrangement in the form of a reciprocating movement, said piston (3) dividing said cavity into a first chamber and into a second chamber, which are respectively referred to as the head end chamber and the crankshaft end chamber, each of said first and second chambers being connected via respective suction valve systems (5 and 6) and discharge valve systems (7 and 8) to a suction pipe (9) and to a discharge pipe (10), said suction and discharge valve systems (5 to 8) each comprising a housing defining a valve chamber (11) and a valve body (12) movable between a first closed position wherein said first or said second chamber is fluidically disconnected from said valve chamber and a second open position wherein said first or said second chamber is fluidically connected to a respective valve chamber, **characterized in that** said compressor (1) is further provided with a container (13) defining a fixed volume, said fixed volume being fluidically connected to a valve chamber of at least one of said discharge valve systems (7 or 8) by means of a pipe (14), wherein said container (13) comprises a hermetically sealed housing (15) so as to restrict any leakage of high-pressure gas to the atmosphere, wherein said pipe (14) that connects the discharge valve chamber (11) to said fixed volume in said container (13) is produced in the form of a straight tube that extends with one end in said discharge valve chamber (11) and with the other end inside said container (13).

2. The reciprocating compressor according to claim 1, **characterized in that** said container (13) comprises a housing (15) and **in that** said container housing (15) is mounted on a respective valve housing.

3. The reciprocating compressor according to claim 2, **characterized in that** a sealing means is provided between a sealing surface of said container (13) and a sealing surface of said valve housing on which said container (13) is mounted.

4. The reciprocating compressor according to any one of the preceding claims, **characterized in that** said cylinder (2) has two discharge valve systems (7 and 8), the valve chamber (11) of each of said discharge valve systems (7 and 8) being connected to an aforementioned container (13).

5. The reciprocating compressor according to claim 4, **characterized in that** the two discharge valve systems (7 and 8) are arranged on the same side of said cylinder (2).

6. The reciprocating compressor according to any one of the preceding claims, **characterized in that** said compressor (1) comprises two piston rods (4), each piston rod (4) being connected to a respective piston (3) and to said drive means.
